Europäisches Patentamt
European Patent Office
Office européen des brevets

(11) Veröffentlichungsnummer: **0 240 681 A1**

# EUROPÄISCHE PATENTANMELDUNG

(21) Anmeldenummer: **87102559.9**

(51) Int. Cl.⁴: **C07F 9/173**, A01N 57/12

(22) Anmeldetag: **24.02.87**

(30) Priorität: **26.02.86 DE 3606157**

(43) Veröffentlichungstag der Anmeldung: **14.10.87 Patentblatt 87/42**

(84) Benannte Vertragsstaaten: **AT BE CH DE FR GB IT LI NL**

(71) Anmelder: **BASF Aktiengesellschaft**
**Carl-Bosch-Strasse 38**
**D-6700 Ludwigshafen(DE)**

(72) Erfinder: **Seppelt, Wolfgang, Dr.**
**Lucas-Cranach-Strasse 8**
**D-6712 Bobenheim-Roxheim(DE)**
Erfinder: **Adolphi, Heinrich, Dr.**
**Kalmitweg 11**
**D-6703 Limburgerhof(DE)**
Erfinder: **Hofmeister, Peter, Dr.**
**Bernard-Humblot-Strasse 12**
**D-6730 Neustadt(DE)**

(54) **Dithiophosphate, Verfahren zu ihrer Herstellung und ihre Verwendung zur Bekämpfung von Schädlingen und Mittel dafür.**

(57) Dithiolphosphate der Formel I

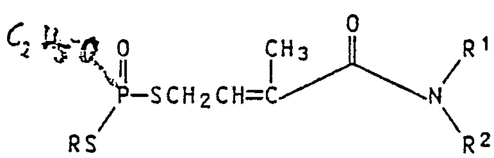

I

in der stehen:
R für einen unverzweigten oder verzweigten Alkylrest mit 3 oder 4 Kohlenstoffatomen;
$R^1$ für Wasserstoff oder einen Alkylrest mit bis zu 3 Kohlenstoffatomen;
$R^2$ für einen Alkylrest mit bis zu 3 Kohlenstoffatomen;
wobei $R^1$ und $R^2$ auch eine Alkylenkette mit 4 oder 5 Kohlenstoffatomen bilden können, in der eine Methylengruppe durch ein Sauerstoffatom ersetzt sein kann, Schädlingsbekämpfungsmittel, enthaltend eine Verbindung der Formel I und Verwendung von Verbindungen der Formel I zur Bekämpfung von Schädlingen.

EP 0 240 681 A1

# Dithiophosphate, Verfahren zu ihrer Herstellung und ihre Verwendung zur Bekämpfung von Schädlingen und Mittel dafür

Gegenstand der Erfindung sind neue Dithiolphosphate, ein Verfahren zu ihrer Herstellung, Schädlingsbekämpfungsmittel, die diese Dithiolphosphate als Wirkstoffe enthalten, sowie ein Verfahren zur Bekämpfung von Schädlingen mit diesen Wirkstoffen.

Wirkstoffe aus der Gruppe der Dithiolphosphate, die zur Bekämpfung von Insekten und Nematoden geeignet sind, sind z.B. aus der US-Patentschrift 3 268 393 bekannt, z.B. O-Ethyl-S,S-dipropyldithiolphosphat mit dem Handelsnamen "MOCAP". Seine Wirkung ist jedoch speziell bei geringer Konzentration nicht immer ganz zufriedenstellend.

Es wurde nun gefunden, daß Dithiolphosphate der Formel I

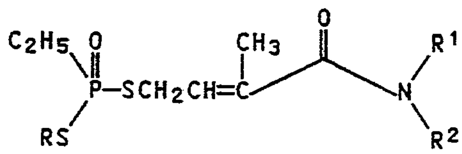

I

in der

R für einen unverzweigten oder verzweigten Alkylrest mit 3 oder 4 Kohlenstoffatomen, $R^1$ für Wasserstoff oder einen Alkylrest mit bis zu 3 Kohlenstoffatomen und $R^2$ für einen Alkylrest mit bis zu 3 Kohlenstoffatomen, wobei $R^1$ und $R^2$ auch eine Alkylenkette mit 4 oder 5 Kohlenstoffatomen bilden können, in der eine Methylgruppe durch ein Sauerstoffatom ersetzt sein kann, stehen, Schädlinge aus der Klasse der Insekten und insbesondere Nematoden wirksamer bekämpfen als bekannte Wirkstoffe.

R steht vorzugsweise für n-Propyl oder sec.-Butyl.

Die neuen Verbindungen werden hergestellt, indem man eine entsprechende Halogenverbindung der Formel II

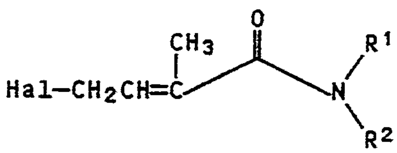

II

in der für Hal bevorzugt Chlor steht, mit einem entsprechenden Salz einer Dithiolphosphorsäure der Formel III,

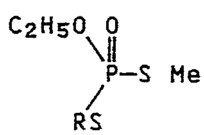

III

wobei Me ein Alkaliion, ein Äquivalent Erdalkaliion, oder ein gegebenenfalls alkylierte Ammoniumion bedeutet umsetzt.

Me in Formel III steht vorzugsweise für ein Natrium-oder Kaliumion oder ein Ammonium-bzw. methyliertes Ammoniumion.

Die Verbindungen der Formel II sind entweder bekannt (Tetrahedron Lett. 1975, 1679; J. Med. Chem. 1977, 602; Chem. Ber. (1981), 144, 959; Ann. Chem. 1977 , 1146) oder können aus geeigneten Vorprodukten (Tetrahedr. Lett. 1977), 1843; ibid. 1975, 1679; J. Chem. Soc. 1956, 3238; DE-OS 2 711 381) durch allgemeine, bekannte chemische Methoden gewonnen werden.

Die Verbindungen der Formel III sind ebenfalls lange bekannt.

Die Umsetzung wird in der für die Umsetzung von organischen Halogenverbindungen mit Alkalisalzen üblichen Weise, z.B. unterhalb von 150°C meist in einem Lösungs-bzw. Verdünnungsmittel durchgeführt. Hierfür sind beispielsweise geeignet: Wasser; Alkohole wie Methanol, Ethanol, Propanol; Ether wie Tetrahydrofuran, Dioxan, Diglykoldimethylether; Ketone wie Aceton, Methylethylketon, Diethylketon; aromatische Kohlenwassrstoffe wie Toluol, Xylol, Chlorbenzol; Nitrile wie Acetonitril, Propionitril; polare, aprotische Solventien wie Diemthylformamid, Dimethylsulfoxid. Auch Gemische dieser Lösungs-und Verdünnungsmittel können verwendet werden. Bei Verwendung von nichtwäßrigen Lösungsmitteln kann die Zugabe einer katalytischen Menge Kaliumjodid oder eines Komplexbildners, z.B. eines Kronenethers, zur Erhöhung der Reaktivität zweckmäßig sein.

Man verwendet die Ausgangsstoffe bevorzugt in stöchiometrischer Menge oder mit einem Überschuß des einen oder anderen Partners.

Aus dem Reaktionsgemisch wird der erfindungsgemäße Wirkstoff in üblicher Weise gewonnen, z.B. durch Versetzen mit Wasser, Trennen der Phasen und Destillation und/oder Säulenchromatographie.

Die neuen Verbindungen der Formel I fallen teilweise in Form farbloser oder schwach bräunlich gefärbter Öle an, die sich durch längeres Erwärmen unter vermindertem Druck auf mäßig erhöhte Temperatur ("Andestillieren") von den letzten flüchtigen Anteilen befreien und auf diese Weise reinigen lassen.

Herstellungsbeispiel 1

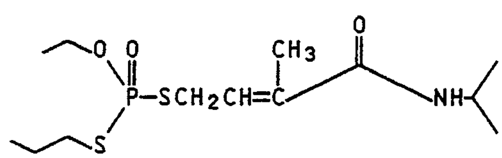

Eine Mischung aus 6,7 g Dimethylammonium-O-ethyl-S-n-propyldithiophosphat, 80 ml Acetonitril und 4 g 4-Chlor-2-methyl-but-2-en-säure-isopropylamid werden 6 h auf 40°C erwärmt. Nach dem Erkalten wird das Lösungsmittel am Rotationsverdampfer abgezogen, der Rückstand in Methyl-tert.-butylether aufgenommen und dreimal mit Wasser gewaschen. Die organische Phase wird über Natriumsulfat getrocknet, das Lösungsmittel im Vakuum entfernt und der Rückstand bei 0,01 mbar und 50°C andestilliert. Man erhält 6 g des Phosphorsäureesters. Ausbeute 78 %. $n_D^{21}$ = 1.5322.

Nach der vorstehenden Vorschrift wurden durch Verwenden anderer Vorprodukte und entsprechende Anpassung der Bedingungen die nachstehend aufgelisteten erfindungsgemäßen Wirkstoffe hergestellt.

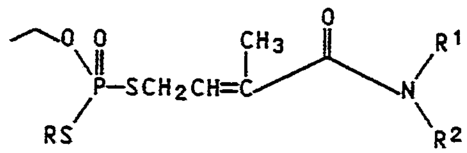

| | R | $R^1$ | $R^2$ | $n_D$ (°C) |
|---|---|---|---|---|
| 2 | sec.-$C_4H_9$ | H | i-$C_3H_7$ | 21 1.5324 |
| 3 | n-$C_3H_7$ | $C_2H_7$ | $C_2H_5$ | 22 1.5205 |
| 4 | sec.-$C_4H_9$ | $C_2H_7$ | $C_2H_5$ | 21 1.5169 |
| 5 | sec.-$C_4H_9$ | $-(CH_2)_2O(CH_2)_2-$ | | 25 1.5315 |
| 6 | n-$C_3H_7$ | $-(CH_2)_2O(CH_2)_2-$ | | 25 1.5350 |
| 7 | i-$C_4H_9$ | $-(CH_2)_2O(CH_2)_2-$ | | 25 1.5335 |
| 8 | i-$C_4H_9$ | $-(CH_2)_5-$ | | 21 1.5362 |
| 9 | n-$C_3H_7$ | $-(CH_2)_5-$ | | 21 1.5420 |
| 10 | sec.-$C_4H_9$ | $-(CH_2)_5-$ | | 21 1.5390 |

Als Vergleichsmittel wurde ein spezielles Nematodenmittel, nämlich (I)

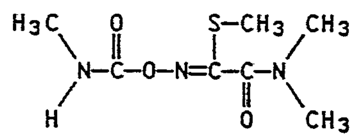

I

(Handelsprodukt Oxamyl)

sowie ein handelsübliches anderes Insektizid,

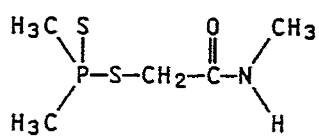

II

(Dimethoat)

verwendet.

Kontaktwirkung auf Schaben (Blatta orientalis)

Der Boden eines 1-l-Weckglases wird mit der acetonischen Lösung des Wirkstoffes behandelt. Nach Verdunsten des Lösungsmittels setzt man je Glas 5 adulte Schaben.
Die Mortalitätsrate wird nach 48 Stunden bestimmt.
Ergebnis:

| | | |
|---|---|---|
| Beispiel 1 | 0,4 mg | 100 % Mort. |
| 2 | 0,04 mg | 100 % " |
| 3 | 0,4 mg | 100 % " |
| 4 | 0,4 mg | 100 % " |
| 5 | 0,4 mg | 100 % " |
| 6 | 0,4 mg | 100 % " |
| 7 | 0,4 mg | 100 % " |
| 8 | 0,4 mg | 100 % " |
| Vergleichsmittel I | 0,5 mg | 100 % " |

Plutella maculipennis; Kohlschaben-Raupen; Fraß-und Kontaktwirkung

Blätter von jungen Kohlpflanzen werden 3 Sekunden in die wäßrige Wirkstoffemulsion getaucht und nach kurzem Abtropfen auf einen angefeuchteten Filter in eine Petrischale gelegt. Das Blatt wird darauf mit 10 Raupen des 4. Stadiums belegt.

Nach 48 Stunden beurteilt man die Wirkung.

Ergebnis:

| | | |
|---|---|---|
| Beispiel 1 | 0,01 mg | 100 % Mort. |
| | 0,004 mg | ca. 80 % " |
| 2 | 0,01 mg | 100 % " |
| 3 | 0,01 mg | 100 % " |
| 4 | 0,01 mg | 100 % " |
| | 0,004 mg | ca. 80 % " |
| 6 | 0,002 mg | ca. 80 % " |
| 7 | 0,004 mg | 100 % " |
| 9 | 0,002 mg | ca. 80 % " |
| 10 | 0,004 mg | ca. 80 % " |
| Vergleichsmittel I | 0,1 mg | < 80 % " |
| II | 0,01 mg | ca. 80 % " |

Wirkung auf Raupen von Prodenia litura

Junge Maisblätter werden 3 Sekunden in die wäßrige Aufbereitung der Wirkstoffe getaucht. Nach dem Antrocknen der Beläge bringt man sie in Petrischalen (D. 10 cm) und besetzt diese mit 5 Raupen von ca. 1,5 cm Länge. Die Wirkung wird nach 48 Stunden bestimmt.

Ergebnis:

| | | |
|---|---|---|
| Beispiel 1 | 0,04 mg | 90 % Mort. |
| 6 | 0,02 mg | 80 % " |
| 7 | 0,04 mg | 100 % " |
| 9 | 0,02 mg | 100 % " |
| Vergleichsmittel I | 0,1 mg | < 80 % " |

Wirkung auf Spinnmilben (Tetranychus telarius) (Test A)

Getopfte Buschbohnen, die das erste Folgeblattpaar entwickelt haben und einen starken Besatz aller Stadien der Spinnmilbe Tetranychus telarius tragen, werden in der Spritzkabine mit der wäßrigen Wirkstoffaufbereitung tropfnaß gespritzt. Die Pflanzen kommen dazu auf einen Drehteller und erden von allen Seiten mit 50 ml Spritzbrühe besprüht. Der Sprühvorgang dauert ca. 22 Sekunden.

Nach 8 Tagen werden die Pflanzen auf lebende Spinnmilben untersucht.

Ergebnis:

| | | |
|---|---|---|
| Beispiel 5 | 0,01 mg | 100 % Mort. |
| 6 | 0,004 mg | 100 % " |
| 7 | 0,004 mg | 100 % " |
| 8 | 0,01 mg | 100 % " |
| 9 | 0,01 mg | 100 % " |
| 10 | 0,02 mg | 100 % " |
| Vergleichsmittel I | 0,025 mg | ca. 80 % " |

Wirkung auf Wurzelgallennemathoden (Meloidogyne incognita)

Je 300 g Komposterde werden mit 30 mnl der wäßrigen Wirkstoffaufbereitung innig vermischt und in Plastiktöpfe gefüllt. Darauf bepflanzt man die Töpfe mit Tomatensetzlingen und hält diese unter Gewächshausbedingungen bei 22 bis 24°C.

Nach 6 bis 8 Wochen untersucht man die Wurzeln auf Gallenbildung.

Ergebnis:

| | | |
|---|---|---|
| Beispiel 1 | 10 ppm | ca. 80 % Hemmung der Gallenbildung |
| 4 | 20 ppm | ca. 80 % Hemmung der Gallenbildung |
| 6 | 10 ppm | ca. 80 % Hemmung der Gallenbildung |
| Vergleichsmittel I | 40 ppm | 100 % Hemmung der Gallenbildung |
| II | 1000 ppm | keine Wirkung |

Wirkung auf Kartoffelnematoden (Globodera rostochiensis)

Erdbehandlung

Nematodenverseuchte Erde wird mit der Wirkstoffaufbereitung innig vermischt und in Tontöpfe ² 9 cm abgefüllt. Jede Konzentration wird doppelt angesetzt. Nach 24 h steckt man pro Topf einen vorgekeimten Kartoffeltrieb.

Nach 8 Wochen zählt man an den von außen sichtbaren Wurzeln die Zysten.

Der Versuch steht unter Gewächshausbedingungen.

Ergebnis:

| | | |
|---|---|---|
| Beispiel 1 | 4 ppm | 0,5 Zysten/Topf |
| Vergleichsmittel I | 4 ppm | 16 Zysten/Topf |

**Ansprüche**

1. Dithiolphosphate der Formel I

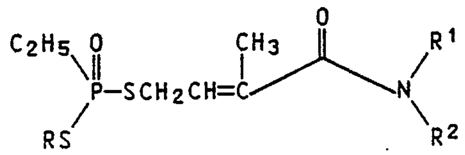

I

in der stehen:
R für einen unverzweigten oder verzweigten Alkylrest mit 3 oder 4 Kohlenstoffatomen;
$R^1$ für Wasserstoff oder einen Alkylrest mit bis zu 3 Kohlenstoffatomen;
$R^2$ für einen Alkylrest mit bis zu 3 Kohlenstoffatomen;
wobei $R^1$ und $R^2$ auch eine Alkylenkette mit 4 oder 5 Kohlenstoffatomen bilden können, in der eine Methylengruppe durch ein Sauerstoffatom ersetzt sein kann.

2. Schädlingsbekämpfungsmittel, enthaltend eine Verbindung der Formel I gemäß Anspruch 1.

3. Schädlingsbekämpfungsmittel, enthaltend einen festen oder flüssigen Trägerstoff und mindestens eine Verbindung der Formel I gemäß Anspruch 1.

4. Verfahren zur Bekämpfung von Schädlingen, dadurch gekennzeichnet, daß man Verbindungen der Formel I gemäß Anspruch 1 auf die genannten Schädlinge bzw. deren Lebensraum einwirken läßt.

5. Verwendung von Verbindungen der Formel I gemäß Anspruch 1 zur Bekämpfung von Schädlingen.

6. Verfahren zur Herstellung von Schädlingsbekämpfungsmittel, dadurch gekennzeichnet, daß man Verbindungen der Formel I gemäß Anspruch 1 mit Streckmitteln und/oder oberflächenaktiven Mitteln mischt.

7. Verfahren zur Herstellung der Verbindungen der Formel I gemäß Anspruch 1, dadurch gekennzeichnet , daß man eine entsprechende Verbindung der Formel II

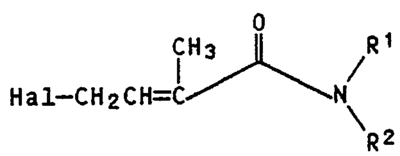

II

in der Hal für ein Halogenatom steht, mit einem entsprechenden Salz eines Dithiophosphorsäurederivats der Formel III

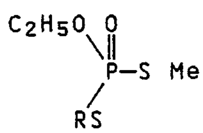

III

wobei Me ein Alkaliion, ein Äquivalent Erdalkaliion oder ein gegebenenfalls alkyliertes Ammoniumion bedeutet, umsetzt.

Europäisches Patentamt

# EUROPÄISCHER RECHERCHENBERICHT

Nummer der Anmeldung

EP 87 10 2559

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | CH-A- 553 221 (CIBA-GEIGY)<br>--- | 1,2 | C 07 F 9/173<br>A 01 N 57/12 |
| A | US-A-3 787 536 (H.O. BAYER et al.)<br>----- | 1,2 | |

| RECHERCHIERTE SACHGEBIETE (Int. Cl.4) |
|---|
| C 07 F 9/173<br>A 01 N 57/12 |

Der vorliegende Recherchenbericht wurde für alle Patentansprüche erstellt.

| Recherchenort | Abschlußdatum der Recherche | Prüfer |
|---|---|---|
| BERLIN | 19-05-1987 | KAPTEYN H G |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument